# EUROPEAN PATENT SPECIFICATION

(11) **EP 0 495 168 B1**
(45) Date of publication and mention of the grant of the patent: **16.10.1996**
(21) Application number: 91119022.1
(22) Date of filing: 07.11.1991
(51) Int. Cl.: D06F 17/12, D06F 17/06

(54) **Washing machine with a bubble generator and method of laundering with the use of air bubbles**
Waschmaschine mit einem Luftblasengenerator und Verfahren zum Waschen mit Luftblasen
Machine à laver avec générateur de bulles et procédé pour laver en utilisant des bulles d'air

(30) Priority: 12.01.1991 KR 91409; 14.08.1991 KR 9114066
(43) Date of publication of application: 22.07.1992
(73) Proprietor: DAEWOO ELECTRONICS CO., LTD, Jung-Gu, Seoul 100-095 (KR)
(72) Inventor: Moo-Seang, Lim, Socho-Ku, Seoul (KR); Seung-Ki, Min, Namdong-Ku, Inchon (KR); Soon-Chur, Se, Dong-Ku, Inchon (KR); Hae-Sang, You, Dong-Ku, Inchon (KR); Jang-Sub, Han, Youngsan-Ku, Seoul (KR)
(74) Representative: Turi, Michael, Dipl.-Phys.

(56) References cited:
- DE-A- 2 907 562
- FR-A- 933 950
- PATENT ABSTRACTS OF JAPAN vol. 14, no. 236 (C-720)18 May 1990 & JP-A-2 060 692 (TOSHIBA CORP.) 1 March 1990

## Description

### Field of Invention

The present invention relates to
- a method of washing or rinsing laundry articles with the aid of air bubbles according to the preamble of claim 1;
- a washing machine which is designed to supply a predetermined amount of air bubbles into the washer according to the preamble of claim 7; and
- a control device in said washing machine according to the preamble of claim 17.

### Description of the Prior Art

Generally, there are two categories of washing machines which are in practical use for the purpose of washing laundry articles such as clothes. A first category involves a vortex-type washer wherein laundry articles are subjected to a washing action as a pulsator therein rotates to generate a vortex flow within the washer tub. Such a vortex-type washer may encompass, in a broad sense, a stirrer-type washer wherein laundry articles are made to undergo a vigorous frictional movement in the washing fluid by means of a bladed stirrer. A second category involves a drum-type washer having a horizontal rotary drum partially submerged in the laundering water. With this type of washer, the laundry articles contained in the rotary drum are rubbed with each other as the drum rotates about its horizontal axis.

These prior art washers have proven to be poor in their overall cleaning efficiency, mainly because they are not able to dissolve the detergent efficiently, nor can they apply a sufficient intensity of physical force to the laundry articles. Although it may be possible for the vortex-type washer to enhance the cleaning efficiency by way of further increasing the rotational speed of the pulsator or stirrer and thereby creating a more intensive vortex in the washer tub, this would give rise to another disadvantage that the laundry articles tend to suffer a severe damage as the washing operation continues. With a view to removing the deficiencies encountered in these washers, there have been proposed a variety of "bubble washers" that make use of air bubbles.

Japanese Patent Laid-open Publication No. Sho 62-189089 discloses a washer which does not incorporate any pulsator; but, instead, comprises a bubble generator and an ultrasonic oscillator. With this washer, cleaning operation is effectuated in a rather static manner by virtue of a combined action of the air bubbles and the ultrasound, making it possible to reduce the level of operational noises. However, this type of washer has been found unsuitable for practical use because it fails to clean the laundry articles with an acceptable degree of detergency.

Japanese Patent Laid-open Publication No. Hei 2-60694 teaches a washer designed to improve the rinsing efficiency by way of feeding air bubbles into the washer tub during the rinsing process. This washer fails to use the air bubbles in the washing process, nor does it suggest a method of using the air bubbles in the washing process.

Japanese Patent Laid-open Publication No. Sho 63-139597 involves a washer wherein a small amount of washing fluid is continuously drained from the washer tub and then fed back to the washer tub together with a volume of air. The travelling air entrained in the return stream is converted into air bubbles as it penetrates through the washing fluid in the washer tub. In this way, the washer tub is continuously supplied with a substantial amount of air bubbles during the course of washing operation. However, such bubble feeding technique has been found disadvantageous because it tends to produce and then sustain an unwanted bubble barrier between the laundry articles and the washing fluid. The bubble barrier may hinder the laundry articles from being brought into contact with the washing fluid and, as a result, reduce the cleaning efficiency.

Japanese Patent Laid-open Publication No. Hei 2-60693 offers a washer wherein the amount of air bubbles varies in proportion to the quantity of laundry articles. The purpose of supplying varied amounts of air bubbles in this washer is to prevent the laundry articles from sinking down to the pulsator and suffering damages caused by the pulsator blades during washing. Supplying the air bubbles in an amount proportionate to the quantity of laundry articles, however, may result in excess bubbles flowing over the washer tub, which in turn may hamper the washing operation. Japanese Patent Laid-open Publication No. Hei 2-60692 describes a washer of the type comprising a conventional pulsator rotatable in a forward or reverse direction with a fixed pause period and a bubble generator for cyclically feeding air bubbles, the feeding cycle being linked to the movement cycle of the pulsator such that the bubble generator feeds a bulk of air bubbles at the moment when the pulsator ceases to rotate. While successful in feeding the air bubbles with a reduced loss, this washer suffers from the deficiency that the air bubbles supplied at such short time intervals that they create bubble barriers on the surface of laundry articles. This may markedly decrease the effective contact area between the washing fluid and the laundry articles. Such a decrease in the contact area often leads to a reduced surface activity on the laundry articles and hence to a lowered cleaning efficiency.

FR-A-933 950 discloses a pulsating supply of air bubbles into the washer tub of a washing machine wherein the air bubble supply alternates between a high and a low pressure supply so as to contribute to the movement of the laundry articles and thereby to increase the cleaning efficiency. However, this laundering method and machine may suffer from similar deficiencies as that known from the aforementioned JP-A-2 060 692.

DE-A-2 907 562 describes a supply of fine air bubbles into the drum of a washing machine, wherein the air bubbles vibrate at a low frequency, e.g. a frequency between 30Hz and 100Hz. Again, this laundering method and machine may suffer from the deficiencies mentioned above.

### Summary of the Invention

It is an object of the present invention to provide an improved washing machine which substantially eliminates those disadvantages inherent in the prior art washers, and hence is capable of washing laundry articles with a higher degree of detergency for a shortened time period.

Another object of the invention is to provide a method of washing laundry articles with a higher efficiency through the combined use of air bubbles and washing fluid.

A further object of the invention is to provide a control device for the washing machine which enables a bubble generator to feed an optimal amount of air bubbles in a batchwise manner in such a time-controlled cycle that said amount of air bubbles supplied in a given batch is substantially collapsed before a next supply of said amount of air bubbles commences.

In one aspect of the invention, there is provided a method of washing or rinsing laundry articles in a washing machine having a washer tub, where said washer tub contains a level of washing fluid and is supplied with air bubbles comprising the steps of:
(A) supplying a predetermined amount of air bubbles into said washer tub;
(B) ceasing a further supply of air bubbles; and
(C) repeating steps (A) and (B) for a sufficient number of times so as to get the laundry articles cleaned to a desired degree of detergency; wherein
(D) said ceasing is made until said amount of air bubbles supplied is substantially collapsed or extinguished.

In another aspect of the invention, there is provided a washing machine which comprises:
(a) a washer tub capable of containing a level of washing fluid; and
(b) means
(b1) for supplying a predetermined amount of air bubbles into said washer tub,
(b2) for ceasing a further supply of air bubbles; and
(b3) for repeating steps (b1) and (b2) for a sufficient number of times so as to get the laundry articles cleaned to a desired degree of detergency, wherein
(c) the air bubble supply means is adapted to make said ceasing time interval such as to allow the air bubbles supplied to be substantially collapsed or extinguished.

The inventive washing machine may further comprise a pulsator rotatably mounted on the bottom of the washer tub for creating a vortex flow within the washer tub; and means for causing the pulsator to rotate in a forward or reverse direction (claim 12). Alternatively, the inventive washing machine may comprise a stationary tub, a rotary drum rotatably and horizontally mounted on the stationary tub with a portion thereof submerged under the washing fluid, said drum having a plurality of through-holes distributed to allow the washing fluid to flow into or out of the drum; and means for causing the drum to rotate in a foward or reverse direction (claim 14).

In a further aspect of the invention, there is a control device for controlling an air pump adapted to feed air bubbles into the washer tub of a washing machine, the washer tub being capable of accommodating a level of washing fluid and a weight of laundry articles, wherein the control device comprises: means for generating a series of signals including a level signal indicative of the level of the washing fluid contained in the washer tub and a load signal indicative of the weight of the laundry articles contained in the washer tub; microprocessor means responsive to the level and the load signals for selecting a predetermined amount of air bubbles and alternately generating an injection control signal for an injection time period wherein the predetermined amount of air bubbles is supplied into the washer tub and a collapsing control signal for a ceasing time period wherein the predetermined amount of air bubbles supplied into the washer tub is substantially collapsed or extinguished; and air pump drive means responsive to the injection control signal for energizing the air pump and responsive to the collapsing control signal for deenergizing the air pump (claim 17).

### Brief Description of the Drawings

The above and other objects and features of the present invention will become apparent from the following description and the accompanying drawings wherein like reference numerals refer to like parts in different views.
Fig. 1 is a schematic sectional view showing an overall construction of a vortex-type washing machine in accordance with the present invention;
Fig. 2 is an enlarged view of the washing machine shown in Fig. 1, illustrating the positional relationship of the bubble generator with respect to the rotatable washer tub and the drain pipe;
Figs. 3A and 3B are, respectively, cross-sectional and perspective views showing an embodiment of the bubble generator in accordance with the present invention;
Fig. 4 is a perspective view of the pulsator that may be advantageously utilized in the present invention;
Fig, 5 shows a travelling path of air bubbles in a preferred embodiment of the present invention, with a portion of the washing machine removed for clarity;
Fig. 6 is a schematic view showing an improved drum-type washing machine in accordance with the present invention;
Fig. 7 is an enlarged perspective view of a rotary drum applicable to the washing machine of Fig. 6;
Fig. 8A is a schematic block diagram of a control device in accordance with the present invention, Fig. 8B being a detailed circuit diagram of an air pump drive circuit associated with the microprocessor;
Fig. 9 is a graphical representation illustrating the relationship between the quantity of air bubbles and the weight of laundry articles when the volume of washing fluid is fixed at A, B or C;
Fig. 10 is a flow chart showing the control sequence of the air pump associated with the control device of Fig. 8;
Fig. 11 graphically compares the cumulative degree of detergency achieved in accordance with the present invention against those of prior art washing machines; and

### Detailed Description of the Preferred Embodiments

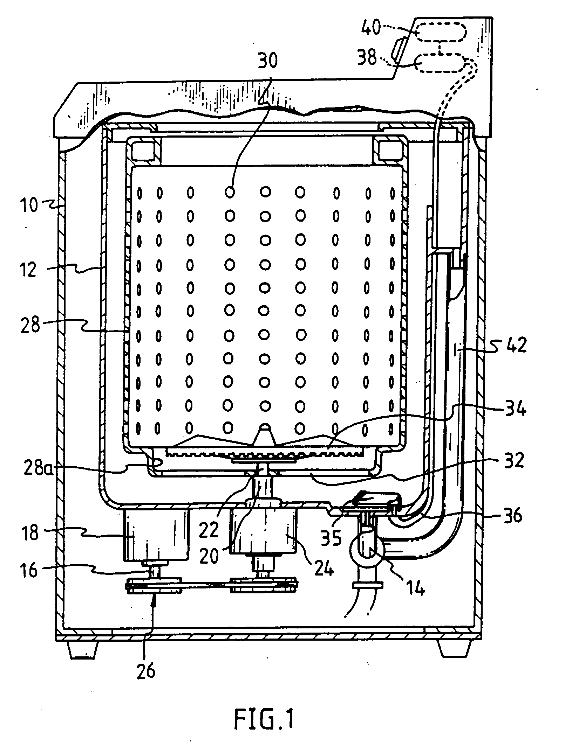

Referring now to Fig. 1, there is shown by way of example a vortex-type washing machine in accordance with the present invention. The washing machine comprises a housing 10 and a stationary washer tub 12 fixedly mounted within the housing 10 for containing therein a level of washing fluid or detergent solution. Connected to the bottom of the stationary tub 12 is a drain pipe 14 that occasionally allows the washing fluid to flow out of the stationary tub 12 during the washing, dewatering and rinsing operations. The washing machine further includes an electric motor 18 having a drive shaft 16 and a clutch assembly 24 having a first and a second driven shafts 20 and 22. As shown, the electric motor 18 and the clutch assembly 24 are both secured to the stationary tub 12 by means of suitable fastener means, e.g., welding or threading. The drive shaft 16 is operatively connected to the driven shafts 20 and 22 through a belt transmission mechanism 26, for instance. The clutch assembly 24 serves to selectively couple the driving force generated by the electric motor 18 with one of the first and the second driven shafts 20 and 22.

The first driven shaft 20 carries at its top end a rotatable washer tub 28 which is kept immovable during the process of washing operation but is caused to rotate at a high speed during the dewatering process. The rotatable tub 28 is provided with, at its side wall, a plurality of washing fluid communication holes 30 permitting the washing fluid to flow into or out of the rotatable tub 28 and, at its bottom wall, a bubble passage 32 through which air bubbles may penetrate into the rotatable tub 28, as further set forth below.

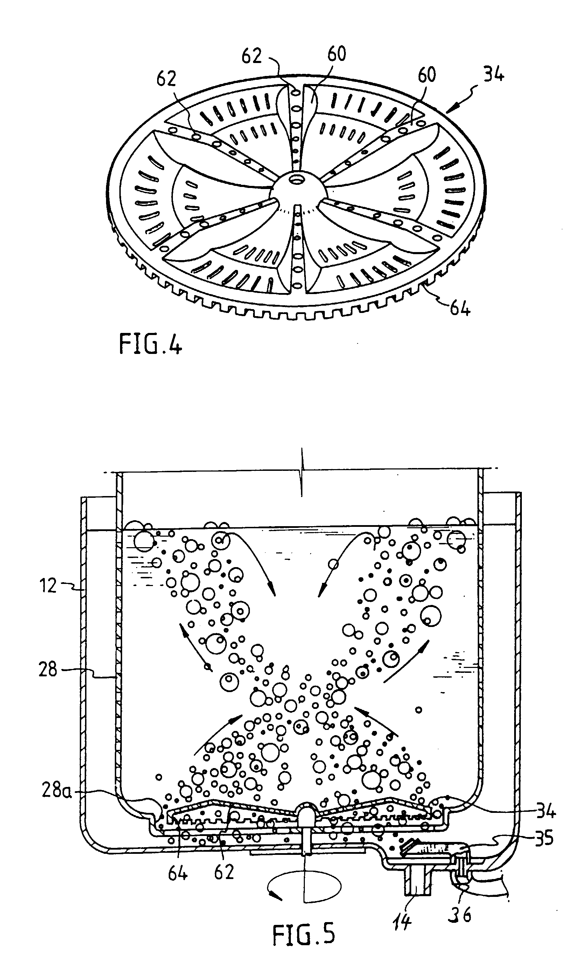

Rotatably mounted on the bottom surface of the rotatable tub 28 is a pulsator 34 carried by the second driven shaft 22. The pulsator 34 is rotatable in a forward or reverse direction to create a vortex flow within the rotatable tub 28, the structural details of which will be discussed below with reference to Fig. 4.

A bubble generator 35 is located on the bottom surface of the stationary tub 12 in order to generate a volume of air bubbles which will in turn penetrate into the rotatable tub 28 through the bubble passage 32. The bubble generator 35 communicates through an air conduit 36 with an air pump 38 which serves to create a volume of pressurized air under a precise control of a control device 40. An overflow pipe 42 is provided outside the stationary tub 12 to gather and then bypass the washing fluid and/or foams which may flow over the stationary tub 12 in the course of washing or dewatering operation.

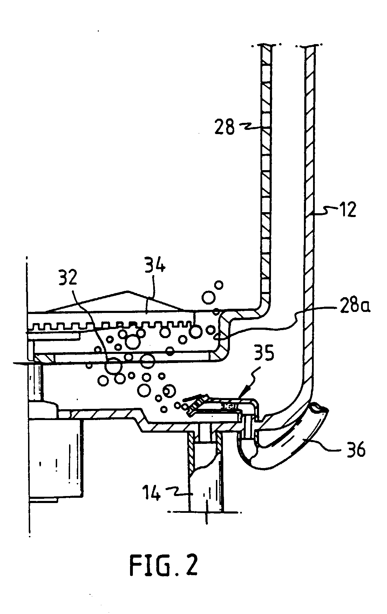

Turning to Fig. 2, there is shown in detail the positional relationship of the bubble generator 35 with respect to the rotatable tub 28 and the drain pipe 14. As shown, the bubble generator 35 is positioned on the bottom surface of the stationary tub 12 so as to emit or shoot the air bubbles toward the bubble passage 32 of the rotatable tub 28. This will enable the air bubbles to penetrate into the rotatable tub 28 with little loss. Moreover, the location of the bubble generator 35 immediately above the drain pipe 14 facilitates movement of the fluid contained in the bubble generator 35, during the draining process, into the drain pipe 14.

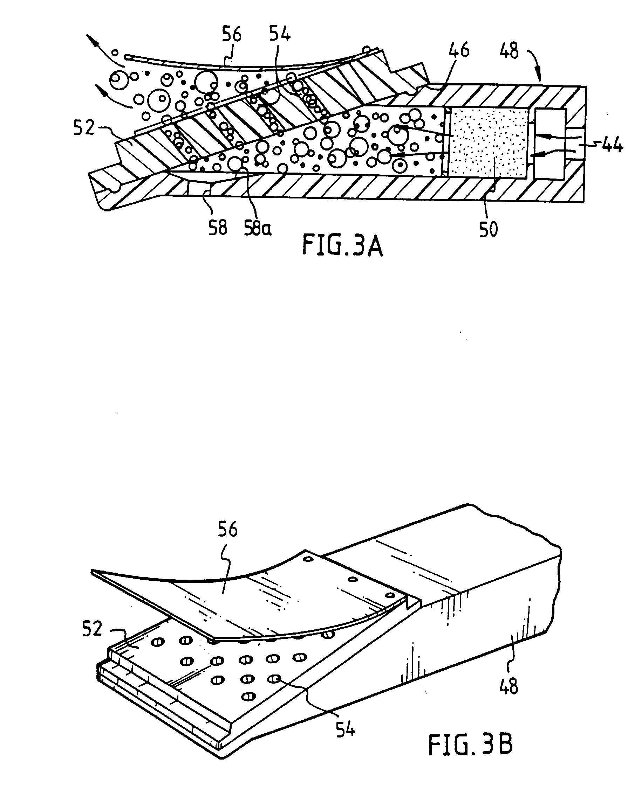

Figs. 3A and 3B illustrate a preferred embodiment of the bubble generator 35 which is applicable to the washing machine of Fig. 1. This bubble generator 35 comprises a casing 48 having an inlet port 44 connectable to the air pump represented as 38 in Fig. 1 and an inclined outlet port 46 opposite the inlet port 44. Inserted within the casing 48 is a porous member 50 made of, e.g., sponge. The porous member 50 provides an interface at which the pressurized air from the air pump 38 meets the washing fluid. The pressurized air will be broken to a plethora of fine bubbles as it passes through the porous member 50. A bubble orientation plate 52 having a number of through-holes 54 is rigidly attached to the outlet port 46 at such an inclined angle that the air bubbles created in the bubble generator 35 can be directed toward the bubble passage 32 of the rotatable tub 28 as clearly shown in Fig. 2.

It is preferable that an elastic flap 56 of sufficient flexibility be secured to the upper margin of the bubble orientation plate 52. The elastic flap 56 normally assumes a first position shown in a phantom line in Fig. 3A to close off the through-holes 54 of the bubble orientation plate 52. When the bubble generator 35 begins to operate, the elastic flap 56 will flex to a second position shown in a solid line in Fig. 3A, allowing the air bubbles to be emitted from the bubble generator 35. Thus, the elastic flap 56 functions to prevent any foreign materials, released from the laundry articles during the washing operation, from infiltrating into the bubble generator 35 or clogging the through-holes 54, which would otherwise lead to a premature failure of the bubble generator 35. In addition, the casing 48 is provided with at its bottom wall a drain port 58 that facilitates removal of the residual fluid contained in the casing 48 whenever the washing fluid is drained through the drain pipe 14 in the draining process. The drain port 58 of the casing 48 terminates at its top slant surface 58a which is configured to make the residual fluid flow toward the drain port 58.

Referring to Fig. 4, there is shown a pulsator 34 which may be advantageously employed in the present invention. The pulsator 34 has a plurality of radial ribs or blades 60 for causing a vortex flow within the rotatable tub 28. Each of the ribs 60 is provided with an array of axial holes 62 pierced through the thickness of the pulsator 34.

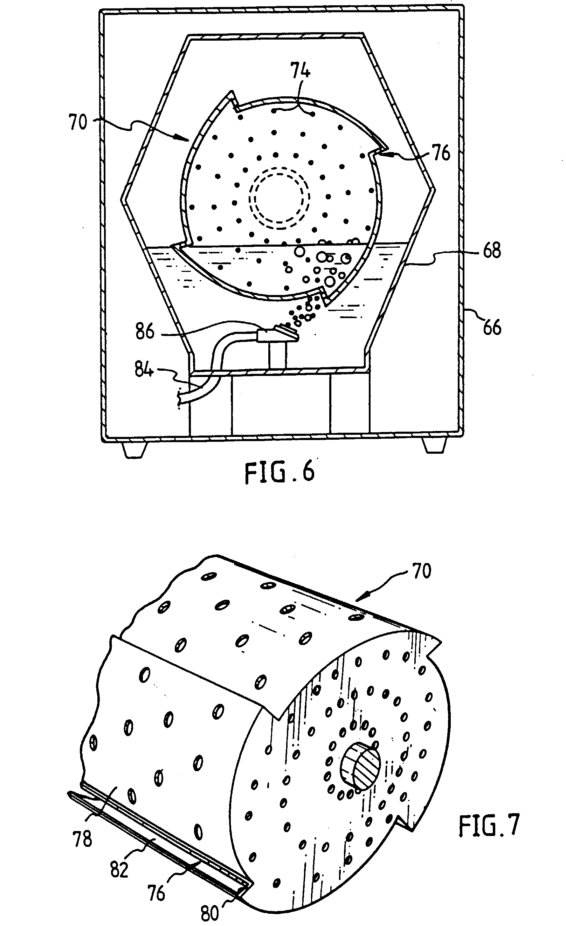

The axial holes 62 serve to pass a part of the air bubbles to the upper space of the rotatable tub 28, especially when the pulsator is in its cease period. Apart from the axial holes 62, there is provided on the peripheral underside of the pulsator 34 a multiplicity of equally spaced radial grooves 64 through which the remaining part of the air bubbles rises up toward the upper space of the rotatable tub 28. As best shown in Fig. 5, the pulsator 34 of the above shape and configuration makes it possible to feed the air bubbles into the rotatable tub 28 in a highly uniform condition. Particularly, most of the air bubbles passing through the radial grooves 64 come into collision with a bubble impinging surface 28a and then travels upward in an inclined direction. This maximizes the amount of air bubbles coming into contact with the laundry articles contained in the rotatable tub 28.

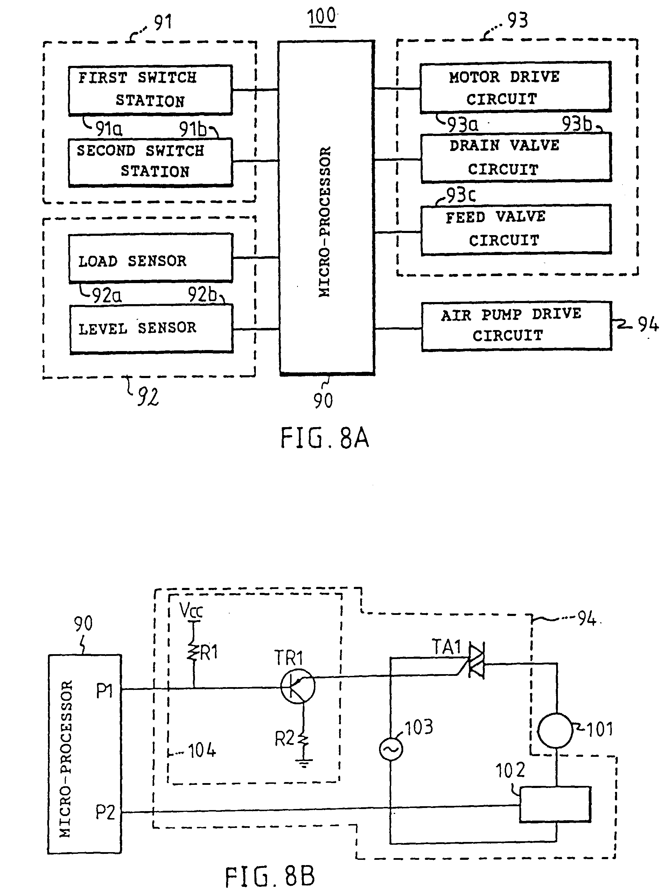

It is of importance to note that the air bubbles in the instant invention should be fed to the rotatable tub 28 in a batchwise manner, and not continuously, at such a time interval that most of the previously supplied air bubbles are collapsed or extinguished by themselves or under the influence of the vortex flow. The time interval is controlled by means of the control device 40 or 100 resp. which will be further described with reference to Figs. 8 to 13. While a specific device for supplying air bubbles into the rotatable tub 28 has been disclosed hereinabove, the invention is not limited thereto and many changes may be made without deteriorating the bubble supply efficiency. For example, it may well be possible to provide a bubble passage along the shaft of the pulsator 34.

As is apparent from Fig. 6, the present invention can equally be applied to a drum-type washing machine. This type of washing machine normally comprises a housing 66 and a stationary tub 68 encased within the housing 66 for containing a level of washing fluid. Horizontally mounted on the stationary tub 68 is a rotary drum 70 capable of accommodating laundry articles therein, the lower portion of the rotary drum 70 being submerged under the washing fluid. The rotary drum 70 has a multiplicity of through-holes 74 which are distributed in a substantially uniform pattern to allow the washing fluid to flow into or out of the drum.

As depicted in Fig. 7, the rotary drum 70 includes four axially extending notches 76 that are spaced apart from one another along the circumference of the drum. Each of the axial notches 76 has a curved leading surface 78 and a flat trailing surface 80 substantially perpendicular to the leading surface 78. Formed on the trailing surface 80 is an axial slot 82, the width of which is large enough to smoothly pass the air bubbles therethrough.

Turning back to Fig. 6, the bubble generator 86 is positioned on the bottom of the stationary tub 68 and communicates with an air pump(not shown) through a conduit 84. It should be appreciated that the bubble generator 86 operates intermittently to feed a predetermined amount of air bubbles into the rotary drum in a periodic batchwise manner. The amount and the supply interval of the air bubbles are controlled by means of a control device which will be described below. Although the bubble generator shown in Fig. 3 can also be applied to the drum-type washing machine with no or little structural changes, other bubble generators may equally be used for the bubble supply purpose. In order to maximize the efficiency of air bubble infiltration into the rotary drum 70 through the axial slots 82 thereof, the bubble generator 86 is so oriented as to emit or shoot the air bubbles toward the axial slots 82 in a counter-clockwise direction. This will prevent the air bubbles shot by the bubble generator 86 from failing to penetrate into the rotary drum 70 and thereby flowing around the rotary drum at the mercy of the clockwise liquid stream.

Fig. 8 is a schematic diagram of a control device of a preferred embodiment employing the invention. The control device 100 comprises a switch pad 91, detection means 92, a microprocessor 90, a load drive circuit 93 and an air pump drive circuit 94. As shown in Fig. 8, the switch pad 91 and the detection means 92 are connected to the inputs of the microprocessor 90 and the load drive circuit 93 and the air pump drive circuit 94 are paired and connected to the outputs of the microprocessor 90.

The switch pad 91 includes a first switch station 91a and a second switch station 91b wherein the first switch station 91a may have a plurality of type selection switches which are used in advising the machine of the type of laundry articles to be washed, and the second switch station 91b may also have a plurality of level selection switches which enable the user to select a preset volume of washing fluid in the washer tub 12 and 28 as shown in Fig.1. For the convenience of manipulation, each type selection switch in the first switch station 91a is provided with an indicium representing the type of laundry articles, e.g., "wool" or "cotton", and each level selection switch in the second switch station 91b is provided with an indicium representing the volume of washing fluid which may be devided by, e.g., three levels, i.e., "High", "Middle" and "Low". It is well known in the art that the switch pad 91 may also comprise other switch stations, e.g., a start switch station. When a type selection switch of the first switch station 91a and a level selection switch of the second switch station 91b are depressed by the user, a type signal indicative of the type of laundry articles and a level signal indicative of the level of washing fluid are respectively issued to the microprocessor 90.

The detection means 92 comprises a load sensor 92a for detecting the weight of the specific type of laundry articles contained within the washer tub 28 shown in Fig.1 and a level sensor 92b for sensing the volume of the washing fluid contained therein. The load sensor 92a, as well known in the art, detects the turning inertia of the washer tub 28 containing the laundry articles and issues a load signal indicative of the weight of laundry articles to the microprocessor 90. The level sensor 92b may be employed to determine whether or not the volume of the < washing fluid provided to the washer tub 28 through a feed valve (not shown) is equal to the volume selected by the second switch station 91b. For the control scheme, the detection means 92 may also include a photo sensor such as the one disclosed in U.S. Patent 4,372,134.

The microprocessor 90, as shown in Fig. 8, may be of any type of microprocessor suitable for such control purpose, which has a storage region therein or a separate memory device. The storage region may contain a plurality of washing course programs stored in the form of instructions and data, as further described below. Each washing course program may be selected by the type and the level selection signal and the load signal from the load sensor 92a. The microprocessor 90 may execute and process a series of instructions and data in response to the selected washer control course to provide control signals to a load drive circuit 93 and an air pump drive circuit 94.

The load drive circuit 93 comprises a motor drive circuit 93a, a drain valve circuit 93b and a feed valve circuit 93c. The motor drive circuit 93a is responsive to a motor control signal from the microprocessor 90 to enable the motor to rotate the pulsator 34 and the washing tub 28 shown in Fig. 1. The drain valve circuit 93b is responsive to a drain valve control signal to turn on or off the drain valve(not shown) for displacing the washing fluid from the washer tub. The feed valve circuit 93c is responsive to a feed valve control signal to turn on or off the feed valve (not shown) for supplying a predetermined amount of washing fluid to the washer tub 12 and 28.

The air pump drive circuit 94 is responsive to the injection control signal from the microprocessor 90 to energize the air pump 101. In Fig. 8B, a detailed circuit diagram of the air pump drive circuit 94 is shown in association with the microprocessor 90. The details of the load drive circuit 93, the switch pad 91 and the detection means 92 are omitted here for the sake of convenience.

In Fig. 8B, the air pump drive circuit 94 comprises an output control device 102 which is responsive to an output control signal from the microprocessor 90 to control the output power of the air pump 101; a triac TA1 which is adapted to connect the AC source 103 to the air pump 101 via the output control device 102; and a triac drive circuit 104 which is responsive to a triac control signal from the microprossor 90 to turn on or off the triac TA1. The triac drive circuit 104 comprises a transistor TR1 wherein the emitter of the transistor TR1 is connected to the gate of the triac TA1, its collector is connected through a resistor R₂ to the earth, and its base is coupled with an output port P₁ of the microprocessor 90. The base of the transistor TR1 is also linked to the DC source Vcc via a resistor R₁. Referring to Fig. 8B, it may be readily understood by one skilled in the art that, with a constant output power of the air pump 101, the air pump drive may be controlled by providing a "High" level or "Low" level signal to the triac drive circuit 104 by turning on or off the triac TA1 to link or separate the AC power source 103 to or from the airpump 101.

Referring back to Fig. 8A, the control scheme of the washer is performed by the control circuit 100, which comprises a plurality of washing courses, each of which may be, as known in the art, selected based on the type and the weight of laundry articles and the volume of washing fluid; and involves three types of operating modes, i.e., washing mode, rinsing mode, and dewatering mode. That is, a given washing course may comprise: a washing mode having a predetermined time period; a rinsing mode having a preset number of operations; and a dewatering mode also having a preset number of operations. The rinsing mode and the dewatering mode may be alternately operable, and the predetermined time period and the preset number of operations may be selected for each specific washing course.

In the washing mode, when the washing fluid in the washer tub reaches a predetermined level, forward and reverse motor drive signals from the microprocessor 90 are sequentially sent to the motor drive circuit 93a. The motor(18 as shown in Fig. 1) is alternately energized by the motor drive circuit 93a to cause forward and reverse rotation of the pulsator 34, thus producing a water stream flowing in alternately opposite directions. The forward and reverse rotation of the pulsator 34 can be made, e.g., on succesive time intervals of 2 equal seconds. As the pulsator 34 is rotated, the detergent is dissolved in washing fluid and stains are removed from the laundry articles. In this manner, a washing mode is initiated and proceeded for a predetermined time period.

When the washing mode is completed, the output of the motor drive circuit 93a is interrupted, and a drain signal from the microprocessor 90 is given to the drain valve circuit 93b to open the drain valve so that the washing fluid is removed from the washer tub. The motor is rotated only in one direction while this dewatering mode of operation continues.

After the dewatering mode is ended, a rinsing mode with an influx of fresh water is performed. The rinsing mode is similar to the washing mode with the exception of the time interval of the operation and the fresh water fed into the washer tub. In a given washing course, the rinsing mode and the dewatering mode may be alternately performed for a predetermined number of times. As known in the art, such combined modes of operations for a specific washing course may be preprogrammed in the storage region of the microprocessor 90.

According to the present invention, for the washing node in a given washing course, predetermined amounts of air bubbles may be intermittently provided to the washer tub through tie air pump 101 under the control of the microprocessor 90. This is achieved by alternately providing an injection control signal for an injection time period and a collapsing control signal for a collapsing time period to the airpump drive circuit 94 so as to energize and deenergize the air pump 101 during the injection and the collapsing time periods. Referring back to Fig. 8B, the injection control signal may be, e.g., a "H" level voltage signal, while the collapsing control signal may be a "L" level voltage signal.

As described below, supposing that the output power of the air pump 101 is fixed, the injection time period is determined so as to correspond to the predetermined amount of air bubbles which may be empirically obtained. Similarly, the collapsing time period, during which the entire amount of air bubbles introduced is substantially collapsed, may be experimentally determined, which is normally equal to or greater than the injection time period.

The predetermined amount of air bubbles is equivalent to "the saturation bubble quantity" which is the maximum amount of air bubbles that may be kept, under the normal operating conditions, i.e., the amount of air bubbles before they begin to overflow, within the washer tub 28 containing a given load of laundry articles and a given level of washing fluid.

The present inventors have empirically discovered that the saturation bubble quantity y* may be represented by the following formula:$\text{y* = β - α x}$ wherein x is the weight of laundry articles, β denotes a reference bubble quantity and α represents a coefficient of the bubble supply.

The reference bubble quantity β is a constant value corresponding to a given volume of washing fluid, which has been empirically found to approximately statisfy:$\text{β = V x 1/10}$ wherein V is the volume of washing fluid contained in the washer tub.

The bubble supply coefficient α is also experimentally found to be within the range from 0.55ℓ /kg to 0.68ℓ /kg. The capacity of the washing machine is generally represented by the maximum weight of laundry articles which may be accommodated within the washer tub, whereas the maximum volume of washing fluid for the respective capacity of the washing machine is confined by the size of the washer tub thereof. Experimentally, the bubble supply coefficient α may be determined to be, e.g., 0.596ℓ /kg for a 5.2kg washing machine, 0.666ℓ /kg for a 6.6kg washing machine and 0.623ℓ /kg for a 7.5kg washing machine, respectively.

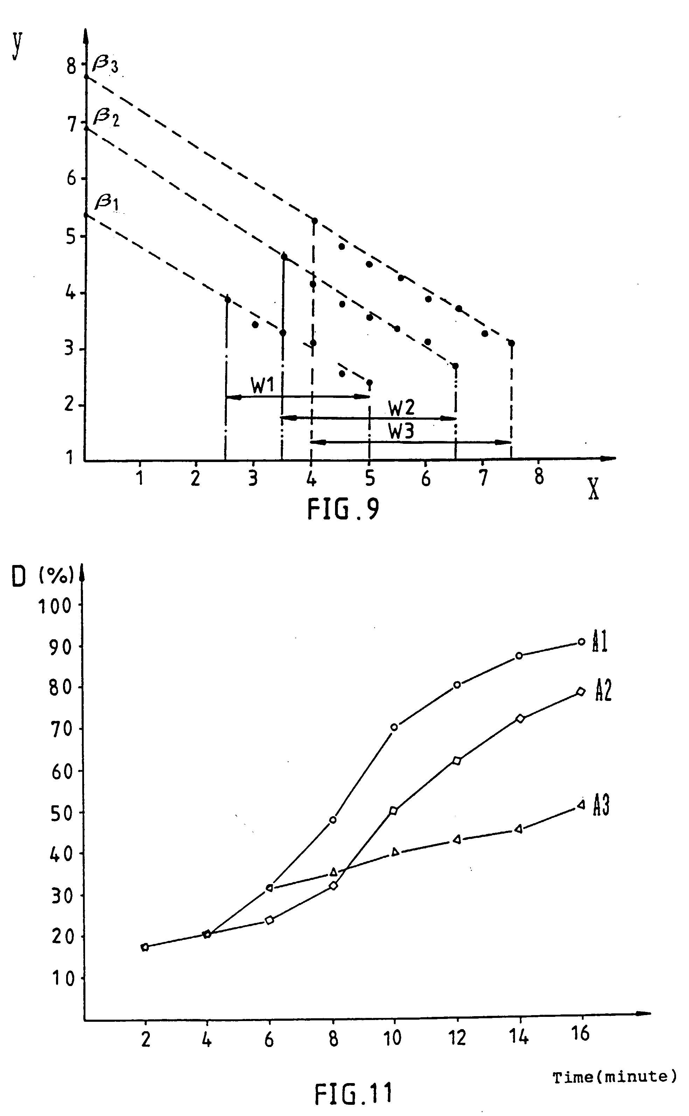

Fig. 9 depicts a graphical representation illustrating a relationshp between the quantity of air bubbles, y, and the weight of laundry articles, x, with the volume of washing fluid as a parameter(A, B and C) wherein W₁(e.g., 2.55∼5.2kg), W₂(e.g., 3.56∼6.6kg) and W₃(e.g., 4∼7.5kg) represent the working load range of laundry articles which can be preferably contained in, e.g., the respective 5.2kg, 6.6kg and 7.5kg washing machines with the respective volume of washing fluid A(e.g., 54ℓ ), B(e.g., 69ℓ ) and C(e.g., 78ℓ ). As shown in Fig. 9, for a given volume of washing fluid A, B or C, the saturated bubble quantity which is represented by the dots is negatively proportional to the weight of laundry articles, which can be closely approximated by Eq. 1 for the working load range of laundry articles in a given washing machine.

Now, assuming the volume of washing fluid is 54ℓ and the weight of laundry articles is 5.2kg, the saturated bubble quantity is y* = 54 x 1/10(ℓ ) - 0.596ℓ /kg x 5.2kg = 2.3ℓ .

As mentioned previously, the injection time period may be computed based on the saturated bubble quantity obtained for a given air pump having a constant output power. That is, assuming the output power of the air pump is 38.3cc/sec, the injection time period is 2.3ℓ ö 38.3cc/sec ≒ 60sec and the collapsing time period may be determined either empirically or by selecting a period identical to or slightly greater than the injection time period as described above.

Consequently, the injection and the collapsing time periods may vary with a given washing course which is selected based on the weight of laundry articles and the volume of washing fluid. It should also be understood that the injection and the collapsing time periods for a selected washing course may be computed using a computer program of the microprocessor employing Eq. 1; or a set of data for the injection and the collapsing time periods compiled empirically may also be stored in the storage region of the microprocessor.

Table 1 summarizes exemplary data on the injection and the collapsing time periods, which are empirically obtained by way of conducting a washing mode operation comprising 6 cycles in. three separate washing courses under the optimal condition using a 5.2kg capactiy washing machine.

**Table 1**

| (unit: sec) | | | | | | | | | | | | |
|---|---|---|---|---|---|---|---|---|---|---|---|---|
| Washing Course | Injection and Collapsing Time Periods | | | | | | | | | | | |
| | d | c | d | c | d | c | d | c | d | c | d | c |
| 1 | 70 | 70 | 50 | 50 | 60 | 60 | 60 | 60 | 60 | 60 | 60 | 60 |
| 2 | 50 | 70 | 50 | 70 | 50 | 70 | 50 | 70 | 50 | 70 | 50 | 70 |
| 3 | 40 | 40 | 20 | 20 | 30 | 30 | 30 | 30 | 30 | 30 | 30 | 30 |
| (output power of the air pump: 38.3 cc/sec) d: injection time period c: collapsing time period | | | | | | | | | | | | |

In carrying out the first washing course to generate the data listed in Table 1, 5.2kg of laundry articles is washed with 54ℓ of washing fluid. Similarly, the second and the third washing courses are conducted with 3kg and 1.5kg laundry articles in 37ℓ and 20ℓ of washing fluid, respectively.

By repeating and covering various possible operation conditions, therefore, data bank for the injection and the collapsing time periods as a function of the weight of laundry articles and the volume of washing fluid is generated and can be stored in the memory region of the control circuit and accessed when an appropriate washing course is selected by the switch pad 91 and the detection means 92.

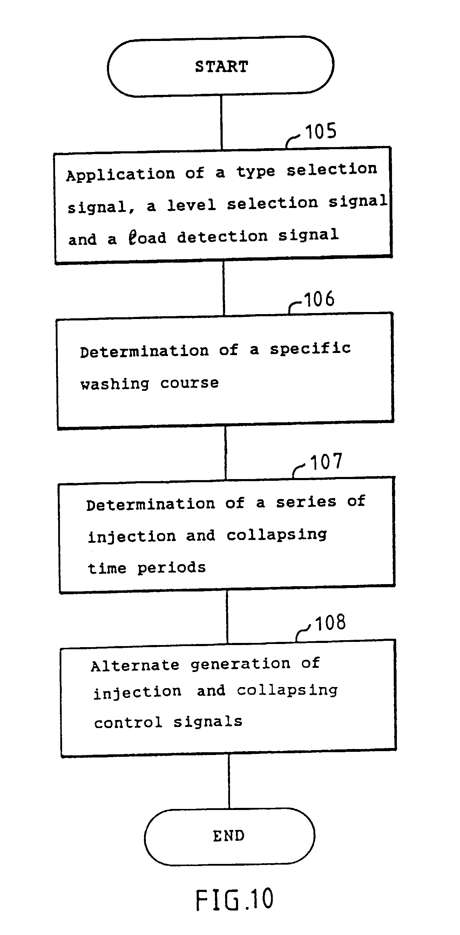

Fig. 10 is shown a flow chart of the air pump control performed by the microprocessor 90 depicted in Fig. 8. In step 105, when the switch pad 91 is depressed by the user and the weight of laundry articles is detected by the load sensor 92a, a type selection signal indicative of the type of laundry articles, a level selection signal indicative of the volume of washing fluid from the switch pad 91 and a load detection signal indicative of the weight of laundry articles from the load sensor 92a are applied to the microprocessor 90.

In step 106, the microprocessor 90, in response to the type selection signal, the level selection signal and the load detection signal, determines a specific washing course.

In step 107, the microprocessor 90 also determines a series of the injection and the collapsing time periods for the specific washing course.

In step 108, the microproccessor 90 alternately provides the air pump drive circuit 94 with the injection control signal for the injection time period and the collapsing control signal for the collapsing time period during the washing mode of operation preset in a specific washing course; and similarly provides the injection and the collapsing control signals to the air pump drive circuit 94 during the rinsing mode of operation thereof.

Description will now be given by way of the following examples to further illustrate the preferred features and advantages of the present invention.

### Example 1

Initially, 5.2kg of dirty cotton towels together with 104g of a detergent formula were put into the washing tub of the improved washing machine of the present invention, containing therein 54ℓ of water heated to about 30°C. The detergent was comprised of 20.8g of lauric acid, 5.2g of sodium carbonate, 52g of sodium sulfide and 26g of sodium tripolyphosphate. While the pulsator was in its normal operation, the air pump was energized for 60 seconds to feed 2.3ℓ of air bubbles into the washing tub and then deenergized for another 60 seconds to allow the air bubbles to be collapsed virtually in their entirety. Such energizing/deenergizing cycle of the air pump was repeatedly carried out for a time period of 16 minutes; and the degree of detergency, D, was measured at a time interval of 2 minutes and plotted to obtain curve A1 as shown in Fig. 11. The degree of detergency, D, was calculated as follows:$\text{D=} \frac{{\text{R}}_{\text{w}} {\text{-R}}_{\text{1}}}{{\text{R}}_{\text{o}} {\text{-R}}_{\text{1}}} \text{x 100(%)}$ wherein Rₒ is the reflective index of a clean reference towel, R₁ represents the pre-washing reflective index of a dirty towel and R_{w} denotes the post-washing reflective index of the cleaned towel.

As is apparent from Fig. 11, the present washing machine has the ability to wash the soiled laundry articles, to a higher degree of detergency(90%) within a relatively short period of time (16 minutes).

### Example 2

The same operation as in Example 1 above was carried out without any air bubbles fed into the washing tub. During the course of washing operation, the degree of detergency was measured at a time interval of 2 minutes and plotted to obtain curve A2 as illustrated in Fig. 11. The degree of detergency reached around 78% after 16 minutes of washing.

### Example 3

The same operation as in Example 1 above was carried out except that the air bubbles were fed into the washing tub continuously. As in the previous experiments, the degree of detergency was measured at a time interval of 2 minutes and plotted to obtain curve A3 as shown in Fig. 11. The degree of detergency measured at the end of washing operation was around 51%.

The above comparative results clearly demonstrate the superior performance of the improved washing machine of the present invention in terms of its washing efficiency in a reduced period of washing time.

Furthermore, the present invention may equally be applied to the rinsing mode, in addition to the normal washing mode set forth hereinabove. For example, a single batch of air bubbles can be supplied to the washing tub immediately before the pulsator begins to operate in the rinsing mode. As the rinsing operation proceeds, the air bubbles tend to remove the odor source, i.e., the residual detergent left in the washed articles, consequently providing an unexpected deodorization effect. As a result, the level of odor lingering in the laundered articles is reduced to such an extent that the user can hardly sense it.

While the best mode and preferred embodiments of the invention have been described herein, variations and changes may be made without departing from the scope and spirit of the invention.

## Claims

1. A method of washing or rinsing laundry articles in a washing machine having a washer tub (12, 28; 68), where said washer tub (12, 28; 68) contains a level of washing fluid and is supplied with air bubbles comprising the steps of:
(A) supplying a predetermined amount of air bubbles into said washer tub (12, 28; 68);
(B) ceasing a further supply of air bubbles; and
(C) repeating steps (A) and (B) for a sufficient number of times so as to get the laundry articles cleaned to a desired degree of detergency;
said method being characterized in that
(D) said ceasing is made until said amount of air bubbles supplied is substantially collapsed or extinguished.

2. The method of claim 1, wherein a predetermined amount of air bubbles, y*, determined by the equation:$\text{y* = β - αx}$ is supplied, wherein β is a reference bubble quantity with respect to a given volume of the washing fluid, α is a coefficient of bubble supply, and x is the weight of the laundry articles.

3. The method of claim 2, wherein the coefficient of bubble supply, α, ranges from 0.55 l/kg to 0.68 l/kg and the reference bubble quantity, β, is equal to one tenth of the volume of the washing fluid.

4. The method of any one of the preceding claims, wherein the ceasing time period is equal or greater than the air bubble supplying time period.

5. The method of any one of the preceding claims, wherein the ceasing time period ranges from 40 to 80 seconds.

6. The method of claim 5, wherein the ceasing time period is of about 60 seconds.

7. A washing machine which comprises:
(a) a washer tub (12, 28; 68) capable of containing a level of washing fluid; and
(b) means (35, 38, 40; 86; 100, 101)
(b1) for supplying a predetermined amount of air bubbles into said washer tub (12, 28; 68),
(b2) for ceasing a further supply of air bubbles; and
(b3) for repeating steps (b1) and (b2) for a sufficient number of times so as to get the laundry articles cleaned to a desired degree of detergency,
characterized in that
(c) the air bubble supply means (35, 38, 40; 86; 100, 101) is adapted to make said ceasing time interval such as to allow the air bubbles supplied to be substantially collapsed or extinguished.

8. The washing machine of claim 7, wherein the air bubble supply means (35, 38, 40; 86; 100, 101) is adapted to supply an amount of air bubbles, y*, determined by the equation:$\text{y* = β - αx}$ wherein β is a reference bubble quantity with respect to a given volume of the washing fluid, α is a coefficient of bubble supply, and x is the weight of the laundry articles.

9. The washing machine of claim 8, wherein the coefficient of bubble supply, α, ranges from 0.55 l/kg to 0.68 l/kg and the reference bubble quantity, β, is equal to one tenth of the volume of the washing fluid.

10. The washing machine of any one of the claims 7 to 9, wherein the bubble supply means (35, 38, 40; 86; 100, 101) includes an air pump (38; 101) for producing a volume of pressurized air, a bubble generator (35; 86) associated with the air pump (38; 101) for converting the pressurized air into the air bubbles, and means (40; 100) for controlling the operation of the air pump (38; 101) so that no air bubbles may be supplied until the air bubbles supplied in a preceding supplying time interval are substantially collapsed or extinguished.

11. The washing machine of claim 10, wherein the air bubble generator (35; 86) includes a casing (48) having an inlet (44) and an outlet (46) port, a porous member (50) housed within the casing (48) to provide an interface between the pressurized air and the washing fluid, a bubble orientation plate (52) mounted on the outlet port (46) of the casing (48), said bubble orientation plate (52) having a plurality of bubble communication holes (54), and a flap valve (56) for closing off the bubble communication holes (54) when the bubble generator (35; 86) does not emit the air bubbles.

12. The washing machine of any one of the claims 7 to 11 having
a) a pulsator (34) rotatably mounted on the bottom of the washer tub (28) for creating a vortex flow within the washer tub (28); and
b) means (16-26, 93a) for causing the pulsator (34) to rotate in a forward or reverse direction.

13. The washing machine of claim 12, wherein the pulsator (34) is provided with a plurality of axial through-holes (62) pierced through the thickness of the pulsator (34) and a plurality of radial grooves (64) formed on the peripheral underside of the pulsator (34), and wherein the washer tub (28) has on its side wall a bubble impinging surface (28a) for directing the air bubbles radially upward within the washer tub (28).

14. The washing machine of any one of the claims 7 to 11 having
a) a stationary tub (68),
b) a rotary drum (70) rotatably and horizontally mounted on the stationary tub (68) with a portion thereof submerged under the washing fluid, said drum (70) having a plurality of through-holes (74) distributed to allow the washing fluid to flow into or out of the drum (70); and
c) means (93a) for causing the drum (70) to rotate in a foward or reverse direction.

15. The washing machine of claim 14, wherein the drum (70) includes a plurality of axial notches (76) spaced apart from one another along the circumference of the drum (70) each of the notches (76) having a curved leading surface (78) and a flat trailing surface (80) substantially perpendicular to the leading surface (78), said drum (70) further including an axial slot (82) formed on each of the trailing surface (80) for allowing an easier penetration of the air bubbles into the drum (70).

16. The washing machine of claim 15, wherein the bubble generator (86) is located on the bottom of the stationary tub (68) so as to shoot the air bubbles toward one of the axial slots (82).

17. A control device (40; 100) for controlling an air pump (38; 101) adapted to feed air bubbles into the washer tub (12, 28; 68) of a washing machine, the washer tub (12, 28; 68) being capable of accommodating a level of washing fluid and a weight of laundry articles, wherein the control device (40; 100) comprises:
(a) means (91, 92) for generating a series of signals including a level signal indicative of the level of the washing fluid contained in the washer tub (12, 28; 68) and a load signal indicative of the weight of the laundry articles contained in the washer tub (12, 28; 68);
(b) microprocessor means (90) responsive to the level and the load signals for selecting a predetermined amount of air bubbles and alternately generating an injection control signal for an injection time period wherein the predetermined amount of air bubbles is supplied into the washer tub (12, 28; 68) and a collapsing control signal for a ceasing time period wherein the predetermined amount of air bubbles supplied into the washer tub (12, 28; 68) is substantially collapsed or extinguished; and
(c) air pump drive means (94) responsive to the injection control signal for energizing the air pump (38; 101) and responsive to the collapsing control signal for deenergizing the air pump (38; 101).

18. The control device (40; 100) of claim 17, wherein the amount of air bubbles, y*, is determined by the equation$\text{y* = β - αx}$ wherein β is a reference bubble quantity with respect to a given volume of the washing fluid, α is a coefficient of bubble supply, and x is the weight of the laundry articles.

19. The control device (40; 100) of claim 18, wherein the coefficient of bubble supply, α, ranges from 0.55 l/kg to 0.68 l/kg and the reference bubble quantity, β, is equal to one tenth of the volume of the washing fluid.

20. The control device (40; 100) of any one of the claims 17 to 19, wherein the ceasing time period is equal to or greater than the injection time period.

21. The control device (40; 100) of any one of the claims 17 to 20, wherein the ceasing time period ranges from 40 to 80 seconds.

22. The control device (40; 100) of claim 21, wherein the ceasing time period is of about 60 seconds.

23. The control device of any one of the claims 17-22, wherein the signal generating means (91, 92) include a switch station (91) for generating the working fluid level signal and a load sensor (92) for detecting the weight of the laundry articles to generate the load signal.

## Patentansprüche

1. Verfahren zum Waschen oder Spülen von Wäsche in einer Waschmaschine mit einem Waschbehälter (12, 28; 68), wobei der Waschbehälter (12, 28; 68) einen Pegel an Waschflüssigkeit enthält und mit Luftblasen beschickt wird mit folgenden Schritten:
(A) Zuführen einer vorgegebenen Menge an Luftblasen in den Waschbehälter (12, 28; 68);
(B) Unterbrechen einer weiteren Zufuhr von Luftblasen; und
(C) Wiederholen der Schritte (A) und (B) hinreichend oft, um die Wäsche bis zu einem gewünschten Reinigungsgrad zu säubern;
wobei das Verfahren dadurch gekennzeichnet ist, daß
(D) die Unterbrechung solange andauert, bis die zugeführte Menge der Luftblasen im wesentlichen kollabiert oder verschwunden ist.

2. Verfahren nach Anspruch 1, bei welchem eine vorgegebene Menge an Luftblasen, y*, zugeführt wird, welche durch die Gleichung:$\text{y* = β - αx}$ bestimmt wird, wobei β eine Bezugsblasenmenge in bezug auf eine bestimmte Waschflüssigkeitsmenge, α ein Blasenzufuhrkoeffizient und x das Gewicht der Wäsche ist.

3. Verfahren nach Anspruch 2, bei welchem der Blasenzufuhrkoeffizient, α, im Bereich von 0,55 l/kg bis 0,68 l/kg liegt, und die Bezugsblasenmenge, β, gleich einem Zehntel der Waschflüssigkeitsmenge ist.

4. Verfahren nach einem der vorstehenden Ansprüche, bei welchem die Unterbrechungszeitperiode gleich oder größer ist als die Luftblasenzufuhrzeitperiode.

5. Verfahren nach einem der vorstehenden Ansprüche, bei welchem die Unterbrechungszeitperiode im Bereich von 40 bis 80 Sekunden liegt.

6. Verfahren nach Anspruch 5, bei welchem die Unterbrechungszeitperiode etwa 60 Sekunden beträgt.

7. Waschmaschine mit:
(a) einem Waschbehälter (12, 28; 68), welcher einen Pegel an Waschflüssigkeit aufnehmen bzw. enthalten kann; und
(b) Mittel (35, 38, 40; 86; 100, 101)
(b1) zum Zuführen einer vorgegebenen Menge an Luftblasen in den Waschbehälter (12, 28; 68),
(b2) zum Unterbrechen einer weiteren Zufuhr von Luftblasen; und
(b3) zum Wiederholen der Schritte (b1) und (b2) hinreichend oft, um die Wäsche bis zu einem gewünschten Reinigungsgrad zu säubern,
dadurch gekennzeichnet, daß
(c) die Luftblasenzufuhrmittel (35, 38, 40; 86; 100, 101) derart ausgelegt sind, daß sie ein Unterbrechungsintervalls erzeugen, innerhalb dessen die zugeführten Luftblasen im wesentlichen kollabieren oder verschwinden können.

8. Waschmaschine nach Anspruch 7, bei welcher das Luftblasenzufuhrmittel (35, 38, 40; 86; 100, 101) ausgebildet ist, um eine Menge an Luftblasen, y*, zuzuführen, welche durch die Gleichung$\text{y* = β - αx}$ bestimmt ist, wobei β eine Bezugsblasenmenge in bezug auf eine bestimmte Waschflüssigkeitsmenge, α ein Blasenzufuhrkoeffizient und x das Gewicht der Wäsche ist.

9. Waschmaschine nach Anspruch 8, bei welcher der Blasenzufuhrkoeffizient, α, im Bereich von 0,55 l/kg bis 0,68 l/kg liegt, und die Bezugsblasenmenge, β, gleich einem Zehntel der Waschflüssigkeitsmenge ist.

10. Waschmaschine nach einem der Ansprüche 7 bis 9, bei welcher die Blasenzufuhrmittel (35, 38, 40; 86; 100, 101) umfassen: eine Luftpumpe (38; 101) zum Erzeugen einer Druckluftmenge, einen mit der Luftpumpe (38; 101) verbundenen Blasengenerator (35; 86) zum Umwandeln der Druckluft in die Luftblasen und Mittel (40; 100) zum Steuern des Betriebes der Luftpumpe (38; 101), derart, daß solange keine Luftblasen zugeführt werden, bis die in einem vorhergehenden Zufuhrintervall zugeführten Luftblasen im wesentlichen kollabiert oder verschwunden sind.

11. Waschmaschine nach Anspruch 10, bei welcher der Blasengenerator (35; 86) umfaßt: eine Umwandung (48) mit einer Einlaßöffnung (44) und einer Auslaßöffnung (46), ein poröses Teil (50), das innerhalb der Umwandung (48) untergebracht ist, um eine Grenze zwischen der Druckluft und der Waschflüssigkeit auszubilden, eine an der Auslaßöffnung (46) der Umwandung (48) montierte Blasenrichtplatte (52), die mehrere Blasendurchtrittslöcher (54) aufweist, und ein Klappenventil (56) zum Verschließen der Blasendurchtrittslöcher (54), falls der Blasengenerator (35; 86) keine Luftblasen emittiert.

12. Waschmaschine nach einem der Ansprüche 7 bis 11, mit
(a) einem an dem Boden des Waschbehälters (28) drehbar montierten Pulsator (34) zum Erzeugen einer Wirbelströmung innerhalb des Waschbehälters (28); und
(b) Mittel (16-26, 93a) zum Bewirken einer Rotation des Pulsators (34) in eine Vorwärts- oder Rückwärtsrichtung.

13. Waschmaschine nach Anspruch 12, bei welcher der Pulsator (34) mit mehreren axialen Durchgangslöchern (62), welche die Dicke des Pulsators (34) durchdringen, und mit mehreren radialen Rillen (64) ausgestattet ist, welche außen an der Unterseite des Pulsators (34) ausgebildet sind, und bei welcher der Waschbehälter (28) an seiner Seitenwand eine Blasenprallfläche (28a) aufweist, um die Luftblasen innerhalb des Waschbehälters (28) radial nach oben zu richten.

14. Waschmaschine nach einem der Ansprüche 7 bis 11, mit
(a) einem stationären Behälter (68),
(b) einer an dem stationären Behälter (68) rotierbar und in horizontaler Richtung montierten Drehtrommel (70), die mit einem Abschnitt in die Waschflüssigkeit eingetaucht ist, wobei die Trommel (70) mehrere Durchgangslöcher (74) aufweist, die derart verteilt sind, daß die Waschflüssigkeit in die Trommel (70) hinein- und davon herausfließen kann; und
(c) Mittel (93a) zum Bewirken einer Rotation der Trommel (70) in eine Vorwärts- oder eine Rückwärtsrichtung.

15. Waschmaschine nach Anspruch 14, bei welcher die Trommel (70) mehrere axiale Einschnitte (76) aufweist, die entlang des Umfanges der Trommel (70) voneinander beabstandet sind, wobei jeder Einschnitt (76) eine gekrümmte Stirnfläche (78) und eine dazu im wesentlichen senkrechte flache Endfläche (80) aufweist, wobei die Trommel (70) ferner eine an jeder Endfläche (80) ausgebildete axiale Durchgangsöffnung (82) enthält, um ein leichteres Eindringen der Luftblasen (70) zu ermöglichen.

16. Waschmaschine nach Anspruch 15, bei welcher der Blasengenerator (86) am Boden des stationären Behälters (68) angeordnet ist, um die Luftblasen in Richtung einer der axialen Durchgangslöcher (82) auszustoßen.

17. Steuerungsvorrichtung (40; 100) zum Steuern einer für eine Zufuhr von Luftblasen in den Waschbehälter (12, 28; 68) einer Waschmaschine ausgelegten Luftpumpe (38; 101), wobei der Waschbehälter (12, 28; 68) einen Pegel an Waschflüssigkeit und ein Gewicht bzw. eine Menge an Wäsche aufnehmen kann, wobei die Steuerungsvorrichtung (40; 100) umfaßt:
(a) Mittel (91, 92) zum Erzeugen einer Reihe von Signalen einschließlich eines Pegelsignals, welches für den im Waschbehälter (12, 28; 68) befindlichen Waschflüssigkeitspegel kennzeichnend ist, und ein Beladungssignal, welches für das im Waschbehälter (12, 28; 68) enthaltene Gewicht der Wäsche kennzeichnend ist;
(b) Mikroprozessormittel (90), welche auf die Pegelund die Beladungssignale ansprechen, zum Auswählen einer vorgegebenen Menge der Luftblasen und zum abwechselnd Erzeugen eines Injektionssteuersignals für eine Injektionszeitperiode, in welcher die vorgegebene Menge der Luftblasen dem Waschbehälter (12, 28; 68) zugeführt wird, und eines Kollabierungssteuersignals für eine Unterbrechungszeitperiode, in welcher die vorgegebene dem Waschbehälter (12, 28; 68) zugeführte Menge der Luftblasen im wesentlichen kollabiert oder verschwunden ist; und
(c) Luftpumpentreibermittel (94) zum in Betrieb setzen der Luftpumpe (38; 101) auf Empfang des Injektionssteuersignals und zum außer Betrieb setzen der Luftpumpe (38; 101) auf Empfang des Kollabierungssteuersignals.

18. Steuerungsvorrichtung (40; 100) nach Anspruch 17, bei welcher die Menge der Luftblasen, y*, durch die Gleichung$\text{y* = β - αx}$ bestimmt ist, wobei β eine Bezugsblasenmenge in bezug auf eine bestimmte Waschflüssigkeitsmenge, α ein Blasenzufuhrkoeffizient und x das Gewicht der Wäsche ist.

19. Steuerungsvorrichtung (40; 100) nach Anspruch 18, bei welcher der Blasenzufuhrkoeffizient, α, im Bereich von 0,55 l/kg bis 0,68 l/kg liegt, und die Bezugsblasenmenge, β, gleich einem Zehntel der Waschflüssigkeitsmenge ist.

20. Steuerungsvorrichtung (40; 100) nach einem der Ansprüche 17 bis 19, bei welcher die Unterbrechungszeitperiode gleich oder größer als die Injektionszeitperiode ist.

21. Steuerungsvorrichtung (40; 100) nach einem der Ansprüche 17 bis 20, bei welcher die Unterbrechungszeitperiode im Bereich von 40 bis 80 Sekunden liegt.

22. Steuerungsvorrichtung (40; 100) nach Anspruch 21, bei welcher die Unterbrechungszeitperiode etwa 60 Sekunden beträgt.

23. Steuerungsvorrichtung nach einem der Ansprüche 17 bis 22, bei welcher die Signalerzeugungsmittel (91, 92) eine Schaltstation (91) zum Erzeugen des Arbeitsflüssigkeitspegelsignals und einen Beladungssensor (92) zum Erfassen des Gewichts der Wäsche, um das Beladungssignal zu erzeugen, aufweisen.

## Revendications

1. Procédé pour laver ou rincer du linge dans une machine à laver ayant une cuve de lavage (12, 28 ; 68), dans lequel ladite cuve de lavage (12, 28 ; 68) contient un certain niveau de liquide de lavage et est alimentée en bulles d'air comprenant les étapes consistant à :
(A) amener une quantité prédéterminée de bulles d'air dans ladite cuve de lavage (12, 28 ; 68) ;
(B) interrompre une amenée suivante de bulles d'air ; et
(C) répéter les étapes (A) et (B) pendant un nombre de fois suffisant afin de nettoyer le linge à un degré de lessivage souhaité ;
ledit procédé étant caractérisé en ce que
(D) ladite interruption a lieu jusqu'à ce que ladite quantité de bulles d'air amenées soit sensiblement retombée ou détruite.

2. Procédé selon la revendication 1, dans lequel une quantité prédéterminée de bulles d'air, y*, déterminée par l'équation est :$\text{y* = β - αx}$ est amenée, dans lequel β est une quantité de bulles de référence par rapport à un volume donné de liquide de lavage α est le coefficient d'alimentation en bulles, et x est le poids du linge.

3. Procédé selon la revendication 2, dans lequel le coefficient d'amenée des bulles, α, est compris entre 0,55 *l*/kg et 0,68 *l*/kg et la quantité de bulles de référence, β, est égale à un dixième du volume du liquide de lavage.

4. Procédé selon l'une quelconque des revendications précédentes, dans lequel la période d'interruption est égale ou supérieure à la période d'amenée des bulles d'air.

5. Procédé selon l'une quelconque des revendications précédentes, dans lequel la période d'interruption est comprise entre 40 et 80 secondes.

6. Procédé selon la revendication 5, dans lequel la période d'interruption est d'environ 60 secondes.

7. Machine à laver qui comprend :
(a) une cuve de lavage (12, 28 ; 68) pouvant contenir un certain niveau de liquide de lavage ; et
(b) des moyens (35, 38, 40 ; 86 ; 100, 101)
(b1) pour amener une quantité prédéterminée de bulles d'air dans ladite cuve de lavage (12, 28 ; 68),
(b2) pour interrompre une amenée suivante en bulles d'air ; et
(b3) pour répéter les étapes (b1) et (b2) pendant un nombre de fois suffisant afin de nettoyer le linge à un degré de lessivage souhaité,
caractérisée en ce que
(c) les moyens d'alimentation en bulles d'air (35, 38, 40 ; 86 ; 100, 101) sont adaptés pour effectuer ledit intervalle de temps d'interruption afin de permettre aux bulles d'air amenées d'être sensiblement retombées ou détruites.

8. Machine à laver selon la revendication 7, dans laquelle les moyens d'alimentation en bulles d'air (35, 38, 40 ; 86 ; 100, 101) sont adaptés pour amener une certaine quantité de bulles d'air, y*, déterminée par l'équation :$\text{y* = β - αx}$ dans laquelle β est une quantité de bulles de référence par rapport à un volume donné de liquide de lavage, α est un coefficient d'alimentation en bulles, et x est le poids du linge.

9. Machine à laver selon la revendication 8, dans laquelle le coefficient d'alimentation en bulles, α, est compris entre 0,55 l/kg et 0,68 l/kg et la quantité de bulles de référence, β, est égale à un dixième du volume du liquide de lavage.

10. Machine à laver selon l'une quelconque des revendications 7 à 9, dans laquelle les moyens d'alimentation en bulles (35, 38, 40 ; 86 ; 100, 101) comprennent une pompe à air (38, 101) pour produire un volume d'air sous pression, un générateur de bulles (35 ; 86) associé à la pompe à air (38, 101) pour convertir l'air sous pression dans les bulles d'air, et des moyens (40 ; 100) pour commander le fonctionnement de la pompe à air (38 ; 101) de telle sorte qu'aucune bulle d'air ne puisse être amenée jusqu'à ce que les bulles d'air amenées lors d'un précédent intervalle de temps d'amenée soient sensiblement retombées ou détruites.

11. Machine à laver selon la revendication 10, dans laquelle le générateur de bulles d'air (35 ; 86) comprend un carter (48) ayant un orifice d'entrée (44) et de sortie (46), un élément poreux (50) logé à l'intérieur du carter (48) pour fournir une interface entre l'air sous pression et le liquide de lavage, une plaque d'orientation des bulles (52) montée sur ledit orifice de sortie (46) du carter (48), ladite plaque d'orientation des bulles (52) ayant une pluralité de trous de communication pour bulles (54), et une soupape à clapet (56) pour fermer les trous de communication pour bulles (54) lorsque le générateur de bulles (35 ; 86) n'émet pas de bulles d'air.

12. Machine à laver selon l'une quelconque des revendications 7 à 11 ayant
a) un générateur de pulsations (34) monté de manière rotative au fond de la cuve de lavage (28) pour créer un courant tourbillonnaire à l'intérieur de la cuve de lavage (28) : et
b) des moyens (16 et 26, 93a) pour faire tourner le générateur de pulsations (34) dans une direction avant ou arrière.

13. Machine à laver selon la revendication 12, dans laquelle le générateur de pulsations (34) est muni d'une pluralité de trous traversants axiaux (62) percés dans l'épaisseur du générateur de pulsations (34) et une pluralité de rainures radiales (64) formées à la périphérie inférieure du générateur de pulsations (34), et dans laquelle la cuve de lavage (28) possède sur sa paroi latérale une surface d'impact des bulles (28a) pour diriger les bulles d'air radialement vers le haut à l'intérieur de la cuve de lavage (28).

14. Machine à laver selon l'une quelconque des revendications 7 à 11 ayant
a) une cuve fixe (68),
b) un tambour rotatif (70) monté de manière rotative et horizontalement sur la cuve fixe (68) avec une de ses parties immergée dans le liquide de lavage, ledit tambour (70) ayant une pluralité de trous traversants (74) répartis pour permettre au liquide de lavage de s'écouler à l'intérieur et hors du tambour (70) ; et
c) des moyens (93a) pour faire tourner le tambour (70) dans une direction avant ou arrière.

15. Machine à laver selon la revendication 14, dans laquelle le tambour (70) comprend une pluralité d'encoches axiales (76) espacées les unes des autres sur la circonférence du tambour (70), chacune des encoches (76) ayant une surface avant courbe (78) et une surface arrière plate (80) sensiblement perpendiculaire à la surface avant (78), ledit tambour (70) comprenant en outre une fente axiale (82) formée sur chaque surface arrière (80) pour permettre une pénétration plus facile des bulles d'air dans le tambour (70).

16. Machine à laver selon la revendication 15, dans laquelle le générateur de bulles (86) est situé au fond de la cuve fixe (68) afin de lancer des bulles d'air vers l'une des fentes axiales (82) .

17. Dispositif de commande (40 ; 100) pour commander une pompe à air (38; 101) adaptée pour amener des bulles d'air dans la cuve de lavage (12, 28 ; 68) d'une machine à laver, la cuve de lavage (12, 28 ; 68) pouvant recevoir un certain niveau de liquide de lavage et un certain poids de linge, le dispositif de commande (40 ; 100) comprenant :
(a) des moyens (91, 92) destinés à générer une série de signaux comprenant un signal de niveau indiquant le niveau de liquide de lavage contenu dans la cuve de lavage (12, 28 ; 68) et un signal de charge indiquant le poids de linge contenu dans la cuve de lavage (12, 28 ; 68) ;
(b) des moyens de microprocesseur (90) sensibles aux signaux de niveau et de charge pour sélectionner une quantité prédéterminée de bulles d'air et générer de manière alternative un signal de commande d'injection pendant une période d'injection au cours de laquelle la quantité prédéterminée de bulles d'air amenée dans la cuve de lavage (12, 28 ; 68) est sensiblement retombée ou détruite ; et
(c) des moyens (94) d'actionnement de pompe à air sensibles au signal de commande d'injection pour actionner la pompe à air (38 ; 101) et sensibles au signal de commande de retombée pour désactiver la pompe à air (38 ; 101).

18. Dispositif de commande (40 ; 100) selon la revendication 17, dans lequel la quantité de bulles d'air, y*, est déterminée par l'équation$\text{y* = β - αx}$ dans laquelle β est une quantité de bulles de référence par rapport à un volume donné de liquide de lavage, α est un coefficient d'alimentation en bulles, et x est le poids de linge.

19. Dispositif de commande (40 ; 100) selon la revendication 18, dans lequel le coefficient d'alimentation en bulles, α, est compris entre 0,55 l/kg et 0,68 l/kg et la quantité de bulles de référence, β, est égale à un dixième du volume de liquide de lavage.

20. Dispositif de commande (40 ; 100) selon l'une quelconque des revendications 17 à 19, dans lequel la période d'interruption est égale ou supérieure à la période d'injection.

21. Dispositif de commande (4 ; 100) selon l'une quelconque des revendications 17 à 20, dans lequel la période d'interruption est comprise entre 40 et 80 secondes.

22. Dispositif de commande (40 ; 100) selon la revendication 21, dans lequel la période d'interruption est d'environ 60 secondes.

23. Dispositif de commande selon l'une quelconque des revendications 17 à 22, dans lequel les moyens de génération de signaux (91, 92) comprennent une station de commutation (91) pour générer le signal de niveau de fluide pratique et un capteur de charge (92) pour détecter le poids de linge pour générer le signal de charge.
